(19) Europäisches Patentamt
European Patent Office
Office européen des brevets

(11) Veröffentlichungsnummer: **0 162 244**
**B1**

(12) # EUROPÄISCHE PATENTSCHRIFT

(45) Veröffentlichungstag der Patentschrift: **24.06.87**

(51) Int. Cl.[4]: **C 08 G 65/44**, C 08 L 71/04

(21) Anmeldenummer: **85103941.2**

(22) Anmeldetag: **01.04.85**

(54) **Verfahren zur Herstellung von Polyphenylenethern und deren Verwendung zur Herstellung von Formteilen.**

(30) Priorität: **14.04.84 DE 3414239**

(43) Veröffentlichungstag der Anmeldung: **27.11.85 Patentblatt 85/48**

(45) Bekanntmachung des Hinweises auf die Patenterteilung: **24.06.87 Patentblatt 87/26**

(84) Benannte Vertragsstaaten: **BE DE FR GB NL**

(56) Entgegenhaltungen:
**EP-A-0 045 387**
**EP-A-0 071 081**
**EP-A-0 071 093**
**EP-A-0 098 929**
**DE-A-3 033 813**
**DE-A-3 214 425**
**US-A-3 306 874**

(73) Patentinhaber: **BASF Aktiengesellschaft, Carl-Bosch-Strasse 38, D-6700 Ludwigshafen (DE)**

(72) Erfinder: **Muench, Volker, Dr., Luitpoldstrasse 114, D-6700 Ludwigshafen (DE)**
Erfinder: **Hambrecht, Juergen, Dr., Werderstrasse 30, D-6900 Heidelberg (DE)**
Erfinder: **Himmele, Walter, Dr., Eichenweg 14, D-6909 Walldorf (DE)**
Erfinder: **Echte, Adolf, Dr., Leuschnerstrasse 42, D-6700 Ludwigshafen (DE)**
Erfinder: **Swoboda, Johann, Dr., Neuwiesenstrasse 28, D-6700 Ludwigshafen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 162 244 B1

**Beschreibung**

Die Erfindung betrifft ein Verfahren zur Herstellung hochmolekularer Polyphenylenether aus einwertigen Phenolen, die in den beiden ortho-Stellungen oder zusätzlich in einer nach meta-Position, nicht aber in der para-Stellung Alkylsubstituenten aufweisen durch oxidative Kupplungsreaktion mit Sauerstoff bei Temperaturen zwischen 10 und 50° C in Anwesenheit eines Katalysatorkomplexes aus einem Kupfersalz und einem organischen Amin in Gegenwart eines aromatischen $C_6$- bis $C_{10}$-Kohlenwasserstoffs als Lösungsmittel im Bereich von 1:1 bis 20:1 Gewichtsteilen, bezogen auf das monomere Phenol und gegebenenfalls eines Aktivators und Aufarbeitung der erhaltenen Polymerisatlösung.

Bei derartigen Verfahren zur Selbstkondensation einwertiger Phenole durch Einwirken von Sauerstoff sind Katalysatorsysteme erforderlich, die in Gegenwart eines Lösungsmittels die oxidative Kupplungsreaktion in Gang bringen.

Polyphenylenether und Verfahren zu ihrer Herstellung sind an sich bekannt und in zahlreichen Veröffentlichungen, z.B. in den US-Patenten US-A-3 306 874, US-A-3 306 875, US-A-3 375 422, US-A-3 639 656, US-A-3 642 699, US-A-3 733 299, US-A-3 838 102, US-A-3 661 848 und in den DE-Offenlegungsschriften DE-A-2 505 328, DE-A-2 738 889, DE-A-3 033 813, DE-A-3 214 425 und DE-A-3 314 711 beschrieben. Alle diese bisher beschriebenen Reaktionswege weisen jedoch den Nachteil auf, dass bei der oxidativen Polykondensation bei der Herstellung höhermolekularer Polykondensate zu lange Reaktionszeiten erforderlich sind und die Ausbeute an Polyphenylenether zugunsten der Diphenochinonbildung, die eine bekannte Konkurrenzreaktion darstellt, verschoben ist und deshalb zumeist unter 99 Gew.-%, bezogen auf das eingesetzte Phenol, liegt.

In den Literaturstellen US-A-3 306 874, DE-A-2 505 328, DE-A-2 738 889 und DE-A-3 314 711 ist der Einsatz spezieller Amine und spezieller Gemische von Aminen beschrieben. Ferner wird in den Literaturstellen „Journal of Organic Chemistry", *28*, Seite 1300 (1963); „Makromolekulare Chemie" *151*, Seite 221 (1972); „Makromolekulare Chemie" *176*, Seite 1349 (1975) und „Journal of Molecular Catalysis" *19*, Seite 221 (1983), der Einsatz cyclischer Amine, wie z.B. Pyridin, Chinolin, Piperidin und N-Alkylimidazol, beschrieben. Letztere enthalten aber den Stickstoff als Bestandteil des cyclischen Systems selbst. Amine dieser Art und auch die in den Patentschriften genannten Amine und Amingemische bewirken im Amin-Kupferkatalysatorkomplex kurze Polymerisationszeiten bei relativ hohen Nebenproduktanteilen. Nebenproduktanteile sind aber insbesondere bei Aufarbeitungsverfahren nach den Totalisolationsverfahren, wie bei der Mehrstufenverdampfung (vgl. EP-A1-71093) von wesentlichem Nachteil.

Der Erfindung lag deshalb die Aufgabe zugrunde, ein Amin-Kupferkatalysatorsystem zu finden, das bei kurzen Reaktionszeiten Polymere mit vergleichsweise hohen Intrinsic-Viskositäten bei gleichzeitig hoher Ausbeute und geringem Diphenochinongehalt liefert.

Diese Aufgabe wird erfindungsgemäss dadurch gelöst, dass als Aminkomponente im Katalysatorkomplex Amine der allgemeinen Formel (I)

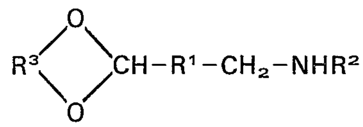

I

eingesetzt werden, wobei $R^1$ = eine $C_2$- bis $C_{20}$-Alkyden- oder Alkenylkette $R^2$ = eine H-Atom oder eine $C_1$- bis $C_{12}$-Alkyl- oder $C_5$- bis $C_8$-Cycloalkylgruppe, die gegebenenfalls funktionelle Gruppen tragen können, und $R^3$ = eine $C_2$- bis $C_{20}$-Alkylengruppe. Bevorzugt ist die funktionelle Gruppe im Rest $R^2$, $-OR^4$, $-NHR^4$ oder $-SR^4$, wobei $R^4$ = H-Atom oder eine $C_1$- bis $C_{12}$-Alkyl- oder $C_5$- bis $C_8$-Cycloalkylgruppe. Bevorzugt sind auch Amine der Formel (I), in denen $R^1$ = eine $C_3$- bis $C_9$-Alkylengruppe, $R^2$ = ein H-Atom oder eine $C_1$- bis $C_4$-Alkylgruppe und $R^3$ = eine $C_2$- bis $C_8$-Alkylengruppe. Besonders bevorzugt sind die Verbindungen gemäss Unteranspruch 4.

Unter hochmolekularen Polyphenylenethern werden die durch oxidative Kupplung von Alkylphenolen zu einer Kette alkylsubstituierter, in para-Stellung durch Sauerstoffatome etherartig gebundene Benzolringe verstanden. Die Polymeren weisen im allgemeinen Molekulargewichte von 15 000 bis 90 000, vorzugsweise 20 000 bis 80 000, bestimmt nach der in „Macromolecular Synthesis" *1* (1978), Seite 83 beschriebenen Methode, auf. Hochmolekulare Polyphenylenether, auch Poly(phenylenoxide) genannt oder als Poly(phenylether) bezeichnet, sind an sich aus der Literatur seit längerem bekannt (vgl. z.B. die US-Patenten US-A-3 661 848, US-A-3 219 625 oder US-A-3 378 505), so dass sich hier eine weitere Beschreibung erübrigt.

Die zur Herstellung der hochmolekularen Polyphenylenether verwendeten einwertigen Phenole, die in den beiden ortho-Stellungen oder zusätzlich in einer meta-Position, nicht aber in der para-Stellung Alkylsubstituenten aufweisen, sind übliche Phenole wie 2,6-Dimethylphenol, 2,6-Diethylphenol, 2-Methyl-6-ethylphenol, 2-Methyl-6-propylphenol, 2,6-Dibutylphenol, 2,3,6-Trimethylphenol sowie Gemische dieser Phenole. Bevorzugt wird das 2,6-Dimethylphenol, das nach den in Houben-Weyl-Müller, Methoden der organischen Chemie, Phenole, Teile 2, Band 6/1 C, Georg Thieme Verlag, Stuttgart, 1976, Seite 1187 ff beschriebenen Methoden von den bei der Polymerisation störenden Phenolen, wie Phenol, o-Kresol, m-Kresol und den höherkernigen Phenolen, wie 2,6-Dimethyl-1-hydroxydiphenyl, abgetrennt wird.

Zur Ausführung der Polykondensation wird üblicherweise Sauerstoff in die 10 bis 50, vorzugsweise 15 bis 40° C warme Lösung des Monomeren in Gegenwart eines Katalysatorkomplexes eingeleitet. Es kann aber auch Luft verwendet werden. Die Sauerstoffdurchflussgeschwindigkeit ist im wesentlichen die gleiche, wie sie in den US-Patenten US-A-3 306 874 und US-A-3 306 875 beschrieben ist.

Bei dem für die bekannten Polykondensationen verwendeten Katalysatorsysteme handelt es sich üblicherweise um eine Kombination aus einem Amin, z.B. n-Dibutylamin, Diethylamin, Picolin, Pyridinbase etc. mit einem Kupfersalz, wie Kupfer-(I)-bromid, Kupfer-(I)-chlorid, Kupfer-(I)-iodid, Kupfer-(II)-bromid, Kupfer-(II)-chlorid, Kupfer-(II)-acetat und andere. Dabei werden die Amine üblicherweise in Mengen von 200 bis 10 000 Mol-%, bezogen auf das eingesetzte Kupfersalz, vorzugsweise in Mengen von 800 bis 2000 Mol-%, und in Mengen von 0,5 bis 50 Mol-%, bezogen auf das eingesetzte Phenol, vorzugsweise in Mengen von 2 bis 20 Mol-%, eingesetzt. Die Konzentration der Amine kann innerhalb weiter Grenzen variieren, zweckmässig sind jedoch niedere Konzentrationen. Die Konzentration der Kupfersalze wird gering gehalten und variiert vorzugsweise von 0,2 bis 2,5 Mol pro 100 Mol des Monomeren.

Der Anteil des Lösungsmittels liegt üblicherweise im Bereich von 1:1 bis 20:1 Gewichtsteilen, d.h. maximal bis zu einem Überschuss des 20-fachen am Lösungsmittel, bezogen auf das Gewicht des Monomeren. Nach anmeldungsgemässem Verfahren soll als Lösungsmittel ein aromatischer $C_6$- bis $C_{10}$-Kohlenwasserstoff verwendet werden. Geeignete Kohlenwasserstoffe sind insbesondere Toluol, Ethylbenzol, Xylol, Diethylbenzol oder deren Gemische, wobei vorzugsweise Toluol oder Ethylbenzol verwendet wird. Die Lösungsmittel werden bevorzugt im Bereich von 1:1 bis 10:1 Gewichtsteilen, bezogen auf das Gewicht des Phenols, eingesetzt. Zur Erhöhung der Katalysatorlöslichkeit können zudem geringe Mengen eines Alkanols, wie Methanol, Ethanol oder iso-Propanol zugegen sein. Darüber hinaus kann die Reaktionsmischung einen Aktivator wie ein Diarylguanidin oder ein Diarylformamidin enthalten (vgl. US-A-3 544 515).

Beispiele für die erfindungsgemäss einzusetzenden Amine der allgemeinen Formel (I) im Kupfer-Katalysatorkomplex sind Amine mit $R^1$ = einer verzweigten oder unverzweigten $C_2$- bis $C_{20}$-Alkylen- oder Alkenylenkette und $R^2$ = einem Wasserstoffatom oder einer niederen Alkyl- oder Cycloalkylgruppe mit 1 bis 12 bzw. 5 bis 8 C-Atomen, wobei der Rest $R^2$ funktionelle Gruppen wie $OR^4$, $NHR^4$, $SR^4$ tragen kann, in denen $R^4$ ein Wasserstoffatom oder eine niedere Alkyl- oder Cycloalkylgruppe mit 1 bis 12 bzw. 5 bis 8 C-Atomen darstellt und $R^3$ = eine verzweigte oder unverzweigte $C_2$- bis $C_{20}$-Alkylengruppe. Bevorzugt ist $R^1$ = eine $C_3$- bis $C_9$-Alkylengruppe, $R^2$ = ein H-Atom oder eine $C_1$- bis $C_4$-Alkylgruppe und $R^3$ = eine $C_2$- bis $C_8$-Alkylengruppe. Beispiele für bevorzugt erfindungsgemäss einzusetzende Amine sind 4-(1,3-Dioxan-2-yl)butylamin, 4-(1,3-Dioxan-2-yl)-3-methylbutylamin, 4-(1,3-Dioxan-2-yl)-4-methylbutylamin, 4-(1,3-Dioxan-2-yl)-2,3-dimethylbutylamin, 5-(1,3-Dioxan-2-yl)-pentylamin, 5-(1,3-Dioxan-2-yl)-3,4-dimethylpentylamin, 6-(1,3-Dioxan-2-yl)-3,5-dimethylhexylamin, 4-Methyl-4-(5,5-diethyl-1,3-dioxan-2-yl)butylamin, N-Methyl-N-[6-(1,3-dioxolan-2-yl)hexyl]amin, N-Ethyl-N-[4-(4,4-dimethyl-1,3-dioxacyclooctan-2-yl)butyl]amin, N-3-Oxabutyl-n-[5-(5,5-dimethyl-1,3-dioxan-2-yl)pentyl]-amin, N-Methyl-N-[4-(1,3-dioxan-2-yl)-3-methylbutyl]amin, N-Butyl-N-[5-(1,3-dioxan-2-yl)-3-methylpentyl]amin, N-5-Thiahexyl-N-[6-(5,5-dimethyl-1,3-dioxan-2-yl)-3-ethyl-4,5-dimethylhexyl]amin. Besonders bevorzugte Amine der allgemeinen Formel (I) sind 4-(1,3-Dioxolan-2-yl)-3-methylbutylamin, 4-(1,3-Dioxolan-2-yl)-2,3-dimethylbutylamin, 6-(1,3-Dioxan-2-yl)-3,5-dimethylhexylamin, N-Methyl-N-[4-(1,3-dioxan-2-yl)-3-methylbutyl]amin und N-Butyl-N-[5-(1,3-dioxan-2-yl)-3-methylpentyl]amin. Am besten geeignet sind 4-(1,3-Dioxan-2-yl)-3-methylbutylamin und N-Methyl-N-[4-(1,3-dioxan-2-yl)-3-methylbutyl]amin.

Zur Aufarbeitung der erhaltenen Polymerisatlösung wird nach Beendigung der Polykondensation nach üblichen Verfahren, die aus den eingangs zitierten Literaturstellen bekannt sind, die Polykondensation z.B. durch Zugabe von wässeriger Ethylendiamintetraessigsäuredinatriumsalz-Lösung abgestoppt und gleichzeitig wird die Metallkomponente durch Komplexbildung und Abtrennung in die wässerige Phase entfernt. Aus der erhaltenen Polyphenylenetherlösung kann das Polymere nach üblichen Verfahren, z.B. durch Ausfällen mit Methanol, abgetrennt werden. Bevorzugt ist aber ein Mehrstufenverdampfungsverfahren, bei dem das Lösungsmittel durch Verdampfen entfernt wird (vgl. EP-A1-71093, DE-A-33 15 803, DE-A-33 15 802).

Die mit der Erfindung erzielten Vorteile bestehen insbesondere darin, dass man ein Polymerisat mit hoher Intrinsic-Viskosität in kurzer Zeit erhält. Bei dieser Polymerisationstechnik wird ausserdem das Polymere in Ausbeuten von grösser als 99 Gew.-%, bezogen auf das eingesetzte Monomer, erhalten. Das bedeutet, der Anteil an Diphenochinon ist niedrig und liegt zumindest unter 1 Gew.-%. Durch den Einsatz der erfindungsgemässen Amine im Kupfer-Katalysatorkomplex werden Polyphenylenether hergestellt, welche eine deutlich geringere Färbung als die nach anderen Methoden synthetisierten besitzen. Des weiteren ist von Vorteil, dass es infolge des angewendeten Polymerisationsverfahrens (Gaseinleitung, starkes Rühren) zu keinem starken Aufschäumen der Reaktionslösung und damit nicht zu Verfahrensschwierigkeiten kommt, obwohl die eingesetzten langkettigen linearen Alkyle, die eine polare Gruppe an einem Ende tragen, eigentlich als Tenside wirken sollten. Des weiteren wird bei dem erfindungsgemässen Verfahren das Abscheiden von Kupfer enthaltenden Niederschlägen verhindert.

Die erhaltenen Polyphenylenether können alleine oder im Gemisch mit anderen Polymeren, insbesondere in Mischung mit Styrolpolymerisaten,

nach üblichen Methoden zu üblichen Formteilen verarbeitet werden.

In den folgenden Beispielen wurden die Tetramethyldiphenochinon-Anteile (DPQ-Anteile) direkt nach der Polymerisation vor der Zugabe des Stabilisators an mit Chloroform verdünnten Lösungen mittels Hochdruckflüssigkeitschromatographie (HPLC) bestimmt.

*Beispiele*

In einem Glaskolben von einem Liter Inhalt mit Rückflusskühler, Blattrührer und Sauerstoffeinleitungsrohr, das bis auf den Boden des Glaskolbens geführt ist, werden 450 g Toluol vorgelegt. Dazu gibt man eine Katalysatormischung aus 0,72 g Cu(I)Br (0,005 Mol), 0,01 Mol des jeweiligen Amins und 10 ml Toluol, die in einem Erlenmeyerkolben bei 50° C unter starkem Rühren innerhalb von 5 Minuten homogenisiert worden war. Die toluolische Katalysatorlösung wird bei 350 Upm Rührergeschwindigkeit mit 50 l/h Sauerstoff begast und 116 g einer 50 gew.-%igen 2,6-Dimethylphenol-Lösung in Toluol (Reinheit des Dimethylphenols: 99,9 Gew.-%) innerhalb einer halben Stunde kontinuierlich zudosiert. Anschliessend wird 0,5 Stunden mit 50 l/h Sauerstoff weiterbegast. Die Reaktionstemperatur wird über die gesamte Zeit bei 26 bis 28° C gehalten. Danach wird die Reaktion durch Zugabe von 20 g einer 10 gew.-%igen wässerigen Ethylendiamintetraessigsäuredinatriumsalz-Lösung gemäss US-A-3306874 bei Raumtemperatur abgestoppt. Der DPQ-Gehalt der Reaktionslösung wird durch HPLC bestimmt und ist in der Tabelle 1 mit aufgeführt. Nach dem Abtrennen der wässerigen Phase wird der Polyphenylenether durch Zugabe der dreifachen Menge Methanol ausgefällt, gewaschen und bei 60° C im Vakuum getrocknet. Die Intrinsic-Viskosität wird bei 25° C in 0,5 gew.-%igen Lösungen in Chloroform bestimmt, sie ist ebenfalls in der Tabelle 1 aufgeführt.

*Vergleichsbeispiele*

Es wurde wie bei den erfindungsgemässen Beispielen gearbeitet, jedoch wurden statt der erfindungsgemäss einzusetzenden Amine solche Amine, wie sie dem Stand der Technik aus den Literaturstellen US-A-3306874, DE-A-2505328, DE-A-2738889 und DE-A-3314711 entsprechen, verwendet. Die Aufarbeitung erfolgte ebenfalls analog den erfindungsgemässen Beispielen.

*Tabelle I* (Beispiele und Vergleichsbeispiele)

| Beispiel | Amine | Polyphenylenether Ausbeute* (Gew. −%) | Polyphenylenether Intrinsic-Viskosität (dl/g) | Diphenochinon-Ausbeute** (Gew. −%) | Bemerkungen zur Polymerisation |
|---|---|---|---|---|---|
| 1 | 4-(1,3-Dioxan-2-yl)--3-methylbutylamin | 99,1 | 0,94 | 0,6 | keine |
| 2 | N-Methyl-N-[4-(1,3-dioxan-2-yl)-3-methyl-]butylamin | 99,2 | 0,87 | 0,5 | keine |
| Vergleichsbeispiele (nicht erfindungsgemäß) | | | | | |
| A | Pyridin | 95,2 | 0,12 | 2,1 | keine |
| B | 2,2,6,6-Tetramethyl-piperidin | 96,3 | 0,06 | 1,6 | keine |
| C | N-Butylimidazol | 95,1 | 1,65 | 2,3 | keine |
| D | Di-n-butylamin | 96,3 | 0,48 | 2,1 | Kupfersalz-abscheidung |
| E | N,N'-Di-tert.-butyl-ethylendiamin (15 Gew.%) Di-n-butylamin (30 Gew.%) Dimethylbutylamin (55 Gew.%) | 98,1 | 0,56 | 1,9 | Kupfersalz-abscheidung |
| F | n-Dodecylamin | 97,8 | 0,61 | 1,9 | starkes Schäumen |

* bezogen auf eingesetztes 2,6-Dimethylphenol, gemessen nach Fällung
** bezogen auf eingesetztes 2,6-Dimethylphenol, gemessen mittels HPLC aus der Lösung

## Patentansprüche

1. Verfahren zur Herstellung hochmolekularer Polyphenylenether aus einwertigen Phenolen, die in den beiden ortho-Stellungen oder zusätzlich in einer meta-Position, nicht aber in der para-Stellung Alkylsubstituenten aufweisen durch oxidative Kupplungsreaktion mit Sauerstoff bei Temperaturen zwischen 10 und 50° C, in Anwesenheit eines Katalysatorkomplexes aus einem Kupfersalz

und einem organischen Amin in Gegenwart eines aromatischen $C_6$- bis $C_{10}$-Kohlenwasserstoffs als Lösungsmittel im Bereich von 1:1 bis 20:1 Gewichtsteilen, bezogen auf das monomere Phenol, und gegebenenfalls eines Aktivators und Aufarbeitung der erhalten Polymerisatlösung, dadurch gekennzeichnet, dass als Aminkomponente im Katalysatorkomplex Amine der allgemeinen Formel (I):

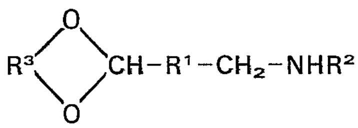 (I)

eingesetzt werden, wobei $R^1$ = eine $C_2$- bis $C_{20}$-Alkylen- oder Alkenylengruppe, $R^2$ = ein H-Atom oder eine $C_1$- bis $C_{12}$-Alkyl- oder $C_5$- bis $C_8$-Cycloalkylgruppe, die gegebenenfalls funktionelle Gruppen tragen können, und $R^3$ = eine $C_2$- bis $C_{20}$-Alkylengruppe bedeuten.

2. Verfahren nach Anspruch 1, dadurch gekennzeichnet, dass im Rest $R^2$ des Amins (I) die funktionellen Gruppen $-OR^4$, $-NHR^4$ oder $-SR^4$ sind, wobei $R^4$ = H-Atom oder eine $C_1$- bis $C_{12}$-Alkyl- oder $C_5$- bis $C_8$-Cycloalkylgruppe.

3. Verfahren nach Anspruch 1, dadurch gekennzeichnet, dass im Amin (I) $R^1$ = eine $C_3$- bis $C_9$-Alkylengruppe, $R^2$ = ein H-Atom oder eine $C_1$- bis $C_4$-Alkylgruppe und $R^3$ = eine $C_2$- bis $C_8$-Alkylengruppe.

4. Verfahren nach Anspruch 1, dadurch gekennzeichnet, dass das Amin (I) 4-(1,3-Dioxan-2-yl)-3-methylbutylamin, 6-(1,3-Dioxan-2-yl)-3,5-dimethylhexylamin, 4-(1,3-Dioxan-2-yl)-2,3-dimethylbutylamin, N-Methyl-N-[4-(1,3-dioxan-2-yl)-3-methylbutyl]-amin und N-Butyl-N-[5-(1,3-dioxan-2-yl)-3-methylpentyl]amin ist.

5. Verwendung der nach Anspruch 1 hergestellten Polyphenylenether zur thermoplastischen Verarbeitung zu Formteilen.

## Claims

1. A process for the preparation of a high molecular weight polyphenylene ether from a monohydric phenol which is alkyl-substituted at the two ortho-positions but not at the para-position, and may or may not be alkyl-substituted at a meta-position, by an oxidative coupling reaction with oxygen at from 10 to 50° C in the presence of a catalyst complex consisting of a copper salt and an organic amine and in the presence of from 1 to 20 parts by weight of an aromatic $C_6$-$C_{10}$-hydrocarbon, as solvent, per part by weight of the monomeric phenol, and in the presence or absence of an activator, and working up of the resulting polymer solution, wherein the amine component used in the catalyst complex is an amine of the general formula (I)

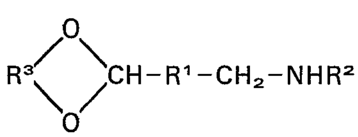 (I)

where $R^1$ is $C_2$-$C_{20}$-alkylene or alkenylene, $R^2$ is H or $C_1$-$C_{12}$-alkyl or $C_5$-$C_8$-cycloalkyl, each of which is optionally substituted by functional groups, and $R^3$ is $C_2$-$C_{20}$-alkylene.

2. A process as claimed in claim 1, wherein, in the radical $R^2$ of the amine (I), the functional groups are $-OR^4$, $-NHR^4$ or $-SR^4$, where $R^4$ is H, $C_1$-$C_{12}$-alkyl or $C_5$-$C_8$-cycloalkyl.

3. A process as claimed in claim 1, wherein, in the amine (I), $R^1$ is $C_3$-$C_9$-alkylene, $R^2$ is H or $C_1$-$C_4$-alkyl, and $R^3$ is $C_2$-$C_8$-alkylene.

4. A process as claimed in claim 1, wherein the amine (I) is 4-(1,3-dioxan-2-yl)-3-methylbutylamine, 6-(1,3-dioxan-2-yl)-3,5-dimethylhexylamine, 4-(1,3-dioxan-2-yl)-2,3-dimethylbutylamine, N-methyl-N-[4-(1,3-dioxan-2-yl)-3-methylbutyl]-amine and N-butyl-N-[5-(1,3-dioxan-2-yl)-3-methylpentyl]-amine.

5. The use of a polyphenylene ether prepared according to claim 1 for the production of moulded parts.

## Revendications

1. Procédé pour la préparation de polyéthers de phénylène de poids moléculaire élevé à partir de phénols monovalents qui présentent des substituants alkyle dans les deux positions ortho ou, en plus, dans une position méta, mais non dans la position para, par réaction de copulation par voie d'oxydation avec de l'oxygène à des températures comprises entre 10 et 50° C, en présence d'un complexe catalyseur formé d'un sel de cuivre et d'une amine organique et en présence d'un hydrocarbure aromatique en $C_6$ à $C_{10}$ servant de solvant, dans une proportion se situant dans la gamme de 1:1 à 20:1 parties en poids par rapport au phénol monomère, et éventuellement d'un activateur, et par traitement ultérieur de la solution de polymère obtenue, caractérisé en ce qu'on utilise, comme composant amine dans le complexe catalyseur, des amines de formule générale (I)

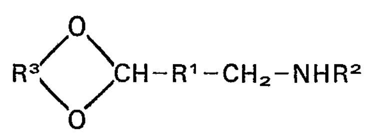 (I)

dans laquelle $R^1$ = groupement alkylène ou alcénylène en $C_2$-$C_{20}$, $R^2$ = atome de H ou groupement alkyle en $C_1$ à $C_{12}$ ou cycloalkyle en $C_5$ à $C_8$, qui peut éventuellement porter des groupements fonctionnels, et $R^3$ = groupement alkylène en $C_2$ à $C_{20}$.

2. Procédé selon la revendication 1, caractérisé en ce que dans le radical $R^2$ de l'amine (I), les groupes fonctionnels sont $-OR^4$, $-NHR^4$ ou $-SR^4$, $R^4$ étant un atome de H ou un groupement alkyle en $C_1$ à $C_{12}$ ou cycloalkyle en $C_5$ à $C_8$.

3. Procédé selon la revendication 1, caractérisé en ce que dans l'amine (I), $R^1$ est un groupement alkylène en $C_3$ à $C_9$, $R^2$ est un atome de H ou un groupement alkyle en $C_1$ à $C_4$ et $R^3$ est un groupement alkylène en $C_2$ à $C_8$.

4. Procédé selon la revendication 1, caractérisé en ce que l'amine (I) est la 4-(1,3-dioxannyl-2)-3-méthylbutylamine, la 6-(1,3-dioxannyl-2)-3,5-diméthylhexylamine, la 4-(1,3-dioxannyl-2)-2,3-diméthylbutylamine, la N-méthyl-N-[4-(1,3-dioxannyl-2)-3-méthylbutyl]-amine ou la N-butyl-N-[5-(1,3-dioxannyl-2)-3-méthylpentyl]-amine.

5. Utilisation des polyéthers de phénylène préparés suivant la revendication 1 pour leur transformation thermoplastique en corps moulés.